# FASCICULE DE BREVET EUROPEEN

(11) **EP 2 449 278 B1**
(45) Date de publication et mention de la délivrance du brevet: **22.04.2015**
(21) Numéro de dépôt: 10734238.8
(22) Date de dépôt: 04.06.2010
(51) Int. Cl.: F16D 21/06

(54) **SYSTÈME DE TRANSMISSION COMPORTANT UN MODULE INTÉGRANT UN MÉCANISME À DOUBLE EMBRAYAGE ET SON DISPOSITIF DE COMMANDE**
ÜBERTRAGUNGSSYSTEM MIT EINEM MODUL MIT INTEGRIERTEM DOPPELKUPPLUNGSMECHANISMUS UND STEUERVORRICHTUNG DAFÜR
TRANSMISSION SYSTEM COMPRISING A MODULE WITH A BUILT-IN DUAL CLUTCH MECHANISM, AND DEVICE FOR CONTROLLING SAME

(30) Priorité: 30.06.2009 FR 0954443
(43) Date de publication de la demande: 09.05.2012
(73) Titulaire: Valeo Embrayages, 80009 Amiens Cedex 2 (FR)
(72) Inventeur: DAST, Pascal, 80750 Fienvillers (FR)
(74) Mandataire: Tran, Chi-Hai
(86) Numéro de dépôt international: PCT/FR2010/051111
(87) Numéro de publication internationale: WO 2011/001055

(56) Documents cités:
- EP-A2- 1 985 877
- DE-A1- 10 349 564
- US-A1- 2003 085 093

## Description

La présente invention concerne un système de transmission comportant un module intégrant un mécanisme à double embrayage et son dispositif de commande.

La présente invention concerne plus particulièrement un système de transmission, notamment pour véhicule automobile, comportant autour d'un axe de rotation d'orientation axiale au moins :
- un mécanisme à double embrayage comportant un premier embrayage et un deuxième embrayage, chaque embrayage comportant un levier, tel qu'un diaphragme, destiné à coopérer avec un plateau de pression, solidaire en rotation d'un couvercle, pour enserrer un disque de friction entre un plateau de réaction et ledit plateau de pression, lesdits embrayages étant respectivement destinés à accoupler sélectivement, à un arbre moteur apte à être entraîné en rotation par un moteur, un premier arbre et un deuxième arbre qui sont, d'une part, chacun liés à un des disques de friction et, d'autre part, destinés à être liés à une boîte de vitesses, et
- un dispositif de commande qui, associé audit mécanisme, comporte des moyens d'actionnement qui, aptes à actionner respectivement le premier levier du premier embrayage et le deuxième levier du deuxième embrayage, sont commandés sélectivement pour permettre le passage de rapports de vitesses de parités différentes.

On connaît de nombreux systèmes de transmission comportant un mécanisme d'embrayage dont l'une des fonctions est de permettre d'accoupler sélectivement l'arbre moteur, formant un arbre menant entraîné par le moteur, à au moins un arbre mené relié à la boîte de vitesses et ce faisant d'autoriser les changements de rapports de vitesses.

Parmi les mécanismes d'embrayage connus de l'état de la technique, le mécanisme à double embrayage est notamment utilisé pour coupler alternativement l'arbre d'un moteur du véhicule avec deux arbres coaxiaux d'entrée d'une boîte de vitesses, dite boîte de vitesses à double embrayage. De tels mécanismes d'embrayage sont connus par example des documents US 2003/0085093 ou EP 1 985 877.

Grâce à un tel mécanisme à double embrayage, encore appelé parfois "double embrayage", il est possible de changer de rapport de vitesses tout en maintenant la transmission d'un couple moteur aux roues du véhicule.

En effet, le mécanisme à double embrayage comprend généralement un premier embrayage et un deuxième embrayage qui sont respectivement associés à des rapports de vitesses de parités différentes, par exemple pairs et impairs.

Lors d'un changement de rapport de vitesses, un des embrayages du mécanisme, par exemple le premier embrayage, occupe une position correspondant à l'état débrayé (ouvert) tandis que l'autre des embrayages du mécanisme, par exemple le second embrayage, occupe une position correspondant à l'état embrayé (fermé) si bien que le couple transmis par le moteur à combustion interne du véhicule à l'arbre moteur est progressivement transféré du premier embrayage au deuxième embrayage.

Ainsi, la somme des couples transmis par les premier et deuxième embrayages est toujours sensiblement égale au couple moteur.

Chaque embrayage du mécanisme comporte un levier, généralement constitué par un diaphragme, qui est destiné à coopérer avec un plateau de pression solidaire en rotation d'un couvercle et de l'arbre moteur. Chaque diaphragme est susceptible d'être déplacé, selon la direction axiale définie par l'axe de rotation, entre au moins une première position et une deuxième position, correspondant aux états embrayé et débrayé, par l'intermédiaire du dispositif de commande comportant des moyens d'actionnement.

Dans la suite, le terme "diaphragme" sera utilisé de manière préférentielle, mais non limitative, pour désigner le levier de chaque embrayage du mécanisme à double embrayage.

Selon le type de l'embrayage, la première position du diaphragme correspond à un couplage ou découplage des arbres liés respectivement au moteur et à la boîte de vitesses de même que la deuxième position du diaphragme correspond à un découplage ou couplage des arbres liés au moteur et à la boîte de vitesses.

Chaque plateau de pression du premier ou du deuxième embrayage est sollicité par un diaphragme associé de manière à enserrer un disque de friction entre ce plateau de pression et un plateau de réaction correspondant.

De plus, les premier et deuxième disques de friction sont respectivement liés en rotation aux premier et deuxième arbres menés qui sont liés à la boîte de vitesses, de même que les premier et deuxième plateaux de pression sont solidaires en rotation d'un premier et deuxième couvercles généralement liés à l'arbre moteur par des moyens de liaison, par exemple par l'intermédiaire d'un volant flexible ou un double volant amortisseur.

La transmission du couple entre l'arbre moteur et l'un des arbres associés à la boîte de vitesses est obtenue sélectivement par le serrage d'un des disques de friction entre les plateaux de pression et de réaction correspondants d'un des deux embrayages du mécanisme.

Dans les conceptions connues de systèmes de transmission selon l'état de la technique, les différents éléments constitutifs sont successivement assemblés entre le moteur et la boîte de vitesses les uns après les autres, en particulier les éléments du mécanisme à double embrayage d'une part, ainsi que ceux du dispositif de commande associé, d'autre part.

D'une manière générale, les opérations de montage sont nombreuses, parfois difficiles à mettre en oeuvre, et de ce fait également coûteuses, notamment en ce qu'elles requièrent généralement des temps de montage important.

De plus, en raison du nombre d'éléments juxtaposés axialement que comportent le mécanisme à double embrayage et le dispositif de commande, on constate que de multiples tolérances imputables aux différents éléments se trouvent cumulées de telle sorte que cela affecte en particulier le bon positionnement du "point" de contact entre les moyens d'actionnement du dispositif de commande et chacun des diaphragmes des embrayages du mécanisme.

De plus, les tolérances des éléments en fonte usinée, par exemple: plateau de pression et de réaction, comme en tôle emboutie par exemple les couvercles du mécanisme, ne sont pour des raisons économiques pas susceptibles d'être réduites au-deçà de certaines valeurs.

Dans ces conditions, il est donc nécessaire d'intégrer la variabilité de la position du point de contact dans la course des moyens d'actionnement du dispositif de commande dès lors que la course axiale totale de l'actionneur, dite course utile, est constituée non seulement de la course nécessaire à l'actionnement, mais encore éventuellement de la course liée à l'usure et enfin de la course liée à la variabilité dudit point de contact initial.

Cette dernière course supplémentaire, outre qu'elle est fonctionnellement inutile, conduit à une augmentation de l'encombrement axial du dispositif de commande ce qui participe à accroître les difficultés de son implantation entre le mécanisme et la boîte de vitesses.

On recherche par conséquent également à limiter l'usure au niveau de la zone dé contact entre chacun des diaphragmes et les moyens d'actionnement qui lui sont associés. Une telle usure est particulièrement sensible au positionnement des axes respectifs du mécanisme et du dispositif de commande qui sont plus ou moins bien alignés selon la direction axiale.

Le but de l'invention est donc de proposer une nouvelle conception de transmission permettant notamment de remédier aux différents inconvénients précités.

Dans ce but, l'invention propose un système de transmission du type décrit précédemment, caractérisé en ce que au moins le mécanisme à double embrayage et le dispositif de commande sont pré-montés pour constituer un module formant un ensemble unitaire et en ce que ledit module est monté solidaire d'un moyen de support qui, lié à l'arbre moteur, supporte intégralement le module.

Avantageusement, les opérations de montage sont simplifiées et réduites à une seule opération.

En effet, le montage d'un tel module est plus rapide dès lors que sont supprimées les montages successifs des différents éléments auparavant nécessaires, en particulier le montage du mécanisme à double embrayage d'une part et du dispositif de commande d'autre part.

Le module d'embrayage selon l'invention intègre au moins le mécanisme à double embrayage et le dispositif de commande de manière à former un sous-ensemble unitaire qui est susceptible d'être rapporté à fixation sur le moyen de support associé.

Avantageusement, on procède au réglage des positions axiales relatives du mécanisme et des moyens d'actionnement du dispositif de commande de manière à supprimer toute course morte inutile.

De préférence, le montage est encore simplifié par le prépositionnement des organes de fixation, avantageusement montés imperdables sur le module, comme par le positionnement, au moins angulairement, des frictions du mécanisme à double embrayage afin de faciliter l'introduction ultérieure des arbres menés qui sont liés à la boîte de vitesses.

De préférence, le dispositif de commande du mécanisme comporte des moyens d'actionnement constitués par des actionneurs, en particulier des actionneurs pneumatiques, pour lesquels le raccordement à une source d'énergie en fluide est susceptible d'être réalisé par des tuyaux ou conduites flexibles sur des moyens de branchement intégrant des valves.

Avantageusement, le moyen de support du module supporte intégralement la masse du module.

Avantageusement, les efforts permanents d'actionnement ne sont nullement supportés par d'autres éléments adjacents, tels que l'arbre moteur, mais s'exercent exclusivement à l'intérieur du module grâce aux moyens de reprise d'efforts formés par exemple par le palier.

Avantageusement, le module est préalablement conditionné au cours de différentes opérations afin de pouvoir être monté directement sur le moyen de support lié à l'arbre moteur en étant apte à fonctionner immédiatement sans requérir d'opérations complémentaires, en particulier de réglages en vue de sa mise en service.

Selon d'autres caractéristiques de l'invention:
- le module comporte des moyens de réglage axial destinés à permettre, préalablement à son montage sur le moyen de support, de positionner axialement le mécanisme à double embrayage et les moyens d'actionnement du dispositif de commande dans une position axiale déterminée correspondant à une position, dite nominale, dans laquelle au moins l'un des moyens d'actionnement sollicite le diaphragme associé avec un effort correspondant aux conditions de fonctionnement à neuf de manière à supprimer toute course morte entre les moyens d'actionnement et au moins l'un des embrayages du mécanisme lors de l'actionnement des embrayages en fonctionnement ;
- le deuxième embrayage du mécanisme comporte un deuxième couvercle qui, agencé radialement à l'extérieur d'un premier couvercle du premier embrayage, est réalisé en au moins deux parties, respectivement avant et arrière, aptes à coulisser axialement l'une par rapport à l'autre de manière à permettre un réglage axial jusqu'à atteindre ladite position nominale déterminée;
- le module est fixé par l'intermédiaire d'organes de fixation, tels que des vis, audit moyen de support qui en supporte entièrement la masse, lesdits organes de fixation étant préalablement montés de manière imperdable sur le module ;
- le moyen de support est constitué par au moins un flasque rigide d'orientation radiale, tel qu'un volant moteur, dont la périphérie radiale interne est liée en rotation à l'arbre moteur et à la périphérie radiale externe duquel le module est rapporté à fixation par l'intermédiaire desdits organes de fixation;
- le module comporte des moyens de verrouillage aptes à immobiliser les moyens de réglage axial dans ladite position nominale ;
- le module comporte des moyens de reprise d'efforts, tels qu'un palier, qui sont aptes à reprendre les efforts que provoquent en fonctionnement les moyens d'actionnement des embrayages de sorte que lesdits efforts soient exclusivement repris à l'intérieur dudit module suivant un flux de forces fermé ;
- le module comporte un carter de protection du dispositif de commande, ledit carter étant lié par des moyens de maintien à un premier couvercle que comporte le premier embrayage du mécanisme à double embrayage ;
- le carter de protection du dispositif de commande est réalisé en au moins deux parties distinctes qui sont aptes à être fixées par des moyens de fixation, tels que des vis pour en permettre le démontage ;
- les moyens de reprise d'efforts du module sont constitués par un palier qui est interposé axialement entre les moyens d'actionnement qu'il supporte et une portion radiale dudit carter de protection du dispositif de commande du mécanisme ;
- le palier est lié au dispositif de commande ou au carter de protection avec une capacité de déplacement relatif selon la direction radiale de manière à former un moyen d'auto-centrage du dispositif de commande par rapport à l'axe de rotation.

D'autres caractéristiques et avantages de l'invention apparaîtront à la lecture de la description détaillée qui suit pour la compréhension de laquelle on se reportera aux dessins annexés parmi lesquels :
- la figure 1 est une vue en coupe axiale qui représente le système de transmission selon un exemple de réalisation de l'invention ;
- les figures 2 et 3 sont des vues en perspective qui représentent une partie du système de transmission, en éclaté, plus particulièrement le moyen de support et le module d'embrayage comportant le mécanisme à double embrayage et le dispositif de commande ;

- les figures 4 et 5 sont des vues en perspective qui représentent une partie du système de transmission après le montage du module sur moyen de support ;
- la figure 6 est une vue arrière du système de transmission selon les figures 4 et 5 qui illustrent notamment les organes de fixation du module ;
- les figures 7 à 9 sont des vues en coupe qui représentent respectivement chacune une variante de réalisation du roulement qui, illustré en détail à la figure 1, assure la reprise interne des efforts dans le module et qui est conçu pour permettre d'assurer un auto-centrage entre le mécanisme à double embrayage et les moyens d'actionnement du dispositif de commande.

Dans la description et les revendications, on utilisera à titre non limitatif et afin d'en faciliter la compréhension, des termes comme "avant" et "arrière", "supérieur" et "inférieur", "externe" et "interne", ainsi que les orientations "axial" ou "radial" pour désigner des éléments selon les définitions données dans la description.

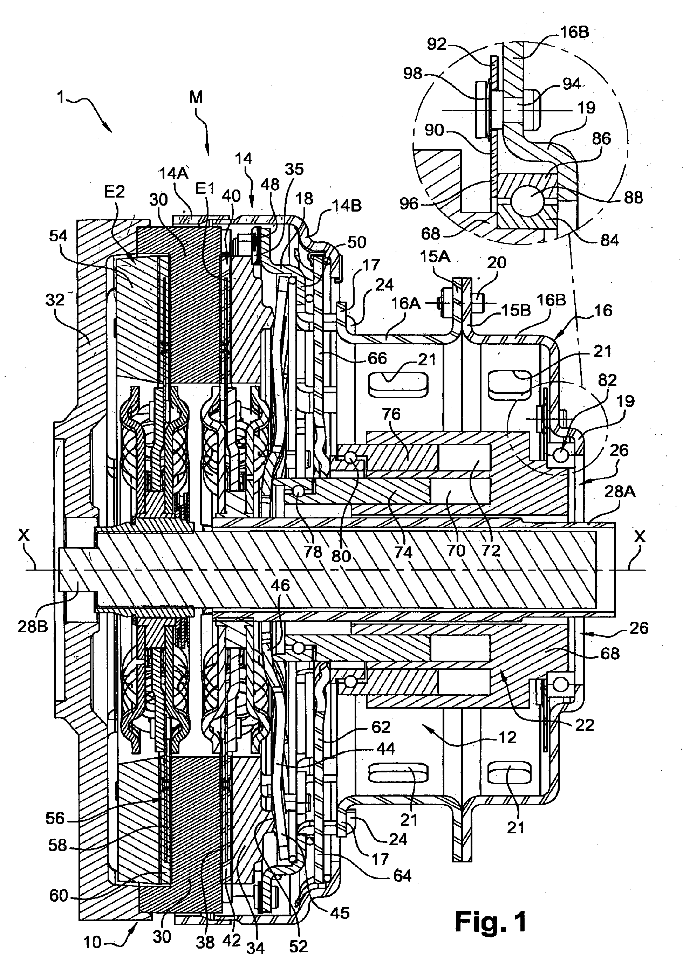

Par convention, les termes "avant" et "arrière" correspondent respectivement à la gauche et à la droite de la figure 1 et sont déterminés par référence à l'axe X de rotation.

Par convention, l'axe X de rotation du système de transmission détermine une orientation axiale et une orientation radiale qui est orthogonale à ladite orientation axiale.

Les termes "supérieur" et "inférieur" correspondent respectivement au haut et au bas de la figure 1 et les termes "externe" et "interne" sont déterminés par référence à l'axe longitudinal X.

Dans la description qui va suivre, toute référence faite à la notion de verticalité n'est nullement donnée en référence à la gravité terrestre et les éléments identiques, analogues ou similaires seront désignés par des mêmes numéros de référence.

On a représenté sur la figure 1, un exemple de réalisation d'un système de transmission 1 selon l'invention, notamment destiné à équiper un véhicule automobile, ledit système présentant un axe X de rotation, d'orientation axiale.

Tel qu'illustré à la figure 1, le système de transmission 1 est partiellement représenté après le montage des principaux éléments constitutifs du système formés par le module M.

Avantageusement, le système de transmission 1 comporte un module M formant un ensemble unitaire qui est formé par au moins un mécanisme à double embrayage 10, comportant un premier embrayage E1 et un deuxième embrayage E2, et d'un dispositif de commande 12 associé audit mécanisme 10, ledit mécanisme 10 et dispositif de commande 12 étant avantageusement pré-montés pour constituer ledit module M.

Le mécanisme à double embrayage 10 est logé avec le dispositif de commande 12 à l'intérieur d'un volume global déterminant l'encombrement général du module M.

Le module M est délimité radialement par une enveloppe constituée par au moins un deuxième couvercle 14 du deuxième embrayage E2 et par un carter de protection 16 associé au dispositif de commande 12 agencé axialement en arrière du mécanisme.

Avantageusement, le deuxième couvercle 14 est réalisé en au moins deux parties, respectivement une partie avant 14A et une partie arrière 14B.

Chacune des parties 14A, 14B du deuxième couvercle 14 comporte un lamage, de préférence annulaire, l'un étant agencé à l'extrémité axiale arrière et radialement sur la face interne de la partie avant 14A et l'autre à l'extrémité axiale avant de la partie arrière 14B et sur la face externe grâce à quoi le couvercle 14 présente une épaisseur sensiblement constante et non double.

Les deux parties 14A et 14B du couvercle sont susceptibles de coulisser axialement l'une par rapport à l'autre, lesdites extrémités munies des lamages étant aptes à se recouvrir axialement plus ou moins l'une et l'autre jusqu'à ce que soit atteinte une position nominale déterminée dans laquelle lesdites parties du deuxième couvercle 14 sont avantageusement immobilisées comme cela sera expliqué plus en détails ultérieurement.

De préférence, le carter de protection 16 est une pièce distincte des couvercles 14, 18 du mécanisme 10, en particulier du premier couvercle 18 de l'embrayage E1 auquel ledit carter 16 est lié.

De préférence, le carter de protection 16 du dispositif de commande 12 est réalisé en au moins deux parties distinctes, respectivement une partie avant 16A et une partie arrière 16B, lesquelles parties 16A, 16B sont aptes à être fixées centralement ensemble par des moyens de fixation 20.

Avantageusement, les moyens de fixation 20 du carter 16 sont constitués par des vis de manière à permettre un démontage ultérieur, de tels moyens de fixation 20 permettant d'ouvrir les deux parties 16A et 16B du carter afin notamment de pouvoir accéder aux moyens d'actionnement 22.

De préférence, le carter de protection 16 est également lié de manière démontable au premier couvercle 18 du mécanisme 10.

La partie avant 16A du carter de protection 16 du dispositif de commande 12 comporte une extrémité axiale avant qui est formée par une portion annulaire 17, d'orientation radiale et s'étendant vers l'extérieur, ladite portion annulaire 17 du carter étant lié au premier couvercle 18 que comporte le premier embrayage E1 du mécanisme 10 à double embrayage.

La liaison entre la portion annulaire 17 du carter 16 et le premier couvercle 18 est par exemple réalisée par l'intermédiaire de moyens de liaison tels que des pattes de liaison 24 qui, présentant ici une forme de crochet, coopèrent axialement avec la face arrière de ladite portion annulaire 17.

Pour assembler les parties 16A et 16B du carter, la partie avant 16A du carter comporte à son extrémité arrière, opposée axialement à l'extrémité avant 17 liée au premier couvercle 18, une joue de fixation 15A, d'orientation radiale, tandis que la partie arrière 16B du carter comporte également à son extrémité avant une joue de fixation 15B, d'orientation radiale, lesdites joues de fixation 15Aet 15B étant destinées à être accolées l'une à l'autre et maintenues ensemble par les vis de fixation 20.

De préférence, les joues de fixation 15A et 15B des parties avant et arrière 16A et 16B du carter de protection 16 du dispositif de commande 12 ne sont pas annulaires, c'est-à-dire ne s'étendent pas circonférentiellement de manière continue, mais sont interrompues.

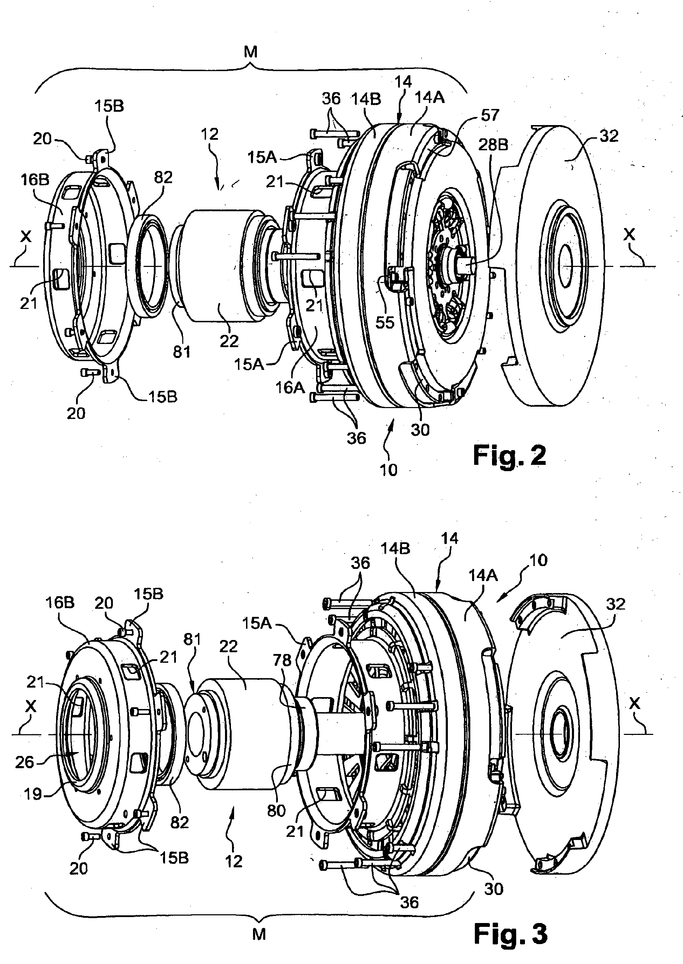

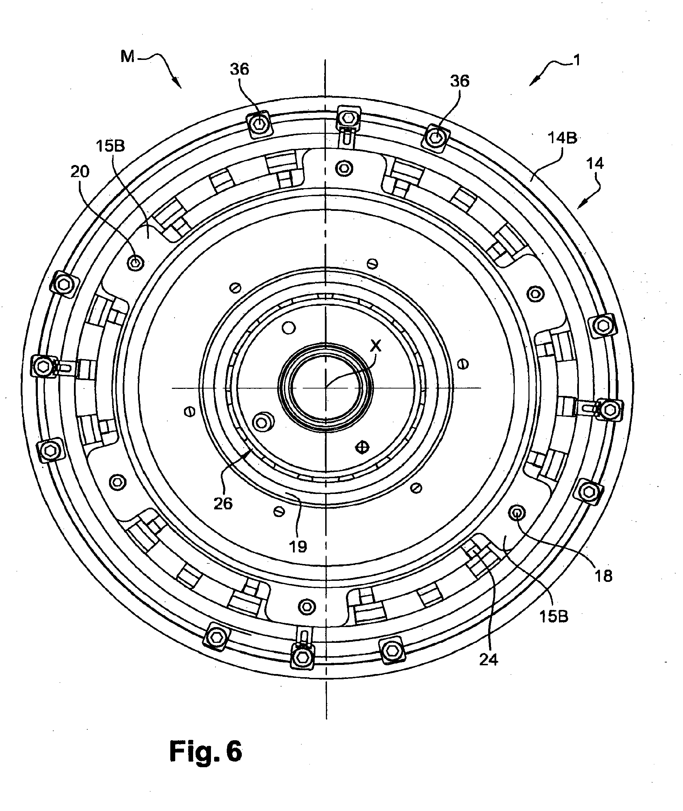

Comme on peut le voir sur la figure 6 ou encore sur lés figures 2 à 5, les joues de fixation 15A, 15B sont avantageusement réparties angulairement de manière régulière autour de l'axe X de rotation et sont par exemple ici au nombre total de 6.

De préférence, le carter de protection 16 comporte des ouvertures 21 destinées à permettre une circulation d'air à travers le carter 16 et donc à l'intérieur du module M.

Avantageusement, une telle circulation d'air est favorable au refroidissement des éléments constitutifs du module M et propre à limiter le confinement de la chaleur produite en fonctionnement par le mécanisme 10 à double embrayage du fait de l'accouplement par friction.

La partie arrière 16B du carter 16 comporte, axialement à l'opposé de l'extrémité libre munie des joues de fixation 15B, une portion d'orientation radiale 19.

Dans l'exemple de la figure 1, la portion radiale 19 présente une extrémité libre qui est d'une part coudée et, d'autre part, interrompue avant l'axe X de rotation de manière à ménager une autre ouverture 26, axialement vers l'arrière, dans le carter de protection 16.

Avantageusement, les ouvertures 26 sont susceptibles de permettre le passage et le raccordement de moyens d'alimentation en fluide (non représentés) des moyens d'actionnement 22 du dispositif de commande 12, lesquels moyens 22 sont de préférence de type pneumatique.

Avantageusement, les ouvertures 26 permettent également le passage de moyens de connectique pour des capteurs (non représentés) servant à piloter les actionneurs, lesdits capteurs étant par exemple fixés aux actionneurs.

En variante, les moyens d'actionnement 22 sont également susceptibles d'être mus par d'autre fluide en particulier hydraulique, mais d'autres moyens d'actionnement par exemple électriques et/ou mécaniques sont également susceptibles d'être utilisés.

Tel que rappelé précédemment, le mécanisme 10 à double embrayage est destiné à accoupler temporairement un arbre moteur (non représenté), généralement un vilebrequin, qui est usuellement agencé axialement en avant du mécanisme 10 (ici à gauche de la figure 1) avec deux arbres menés, respectivement un premier arbre 28A et un deuxième arbre 28B.

L'arbre moteur constitue un arbre menant qui est destiné à être entraîné en rotation par un moteur (non représenté) du véhicule automobile.

Les deux arbres menés 28A et 28B du mécanisme 10 sont concentriques et sont montés rotatifs coaxialement à l'arbre moteur, le premier arbre mené 28A formant un tube ou arbre creux à l'intérieur duquel est agencé le deuxième arbre mené 28B.

Une portion d'extrémité avant libre du deuxième arbre mené 28B s'étend axialement au-delà de l'extrémité avant du premier arbre mené 28A, chacun desdits arbres menés 28A et 28B étant susceptibles de tourner indépendamment de l'autre.

Les arbres menés 28A et 28B sont destinés à être reliés à une boîte de vitesses (non représentée) agencée axialement à l'arrière du système 1, c'est-à-dire ici à droite de la figure 1, au-delà de la portion 19 de la partie arrière 16B du carter 16.

Plus particulièrement, le premier arbre mené 28A correspond à certains des rapports de vitesses de la boîte de vitesses, par exemple ici les rapports de vitesses pairs, tandis que le deuxième arbre mené 28B correspond aux autres rapports de vitesses, par exemple les rapports de vitesses impairs.

Les premier embrayage E1 et deuxième embrayage E2. du mécanisme 10 à double embrayage sont ainsi destinés à accoupler temporairement l'un des arbres menés 28A, 28B à l'arbre moteur et sont à cet effet commandés sélectivement par le dispositif de commande 12 de manière à procéder respectivement au passage successifs de rapports de vitesses de parités différentes.

De manière connue, le mécanisme 10 comporte un plateau radial circulaire de réaction 30 qui est monté à rotation autour de l'axe X de rotation. Le plateau de réaction 30 est agencé en position centrale, il est fixe, immobile axialement, et commun aux embrayages E1 et E2.

Le système de transmission 1 comporte des moyens de support 32, formant un flasque rigide sur lequel le module M selon l'invention est rapporté à fixation.

Selon une caractéristique importante de l'invention, le module M est apte à être monté solidaire dudit moyen de support 32 de manière que le moyen de support 32 en supporte intégralement la masse.

Ainsi, le mécanisme à double embrayage 10 et le dispositif de commande 12 sont préalablement montés pour former ledit module M constituant un ensemble unitaire, ce module M étant ensuite apte à être monté solidaire du moyen de support 32 qui en supporte alors intégralement la masse.

Le plateau de réaction 30 est destiné à être relié à l'arbre moteur, plus précisément le plateau de réaction 30 est solidaire en rotation du moyen de support 32 par l'intermédiaire duquel il est lié en rotation à l'arbre moteur.

De préférence, le module M est fixé par l'intermédiaire d'organes de fixation 36, tels que des vis, audit moyen de support 32 en supportant entièrement la masse.

Plus précisément, les organes de fixation 36 permettent de fixer rigidement le plateau de réaction 30 au moyen de support 32.

Avantageusement, les organes de fixation 36 sont préalablement montés de manière imperdable sur le module M ce qui facilite encore les opérations de montage du module M.

De préférence, le moyen de support 32 est constitué par au moins un flasque rigide d'orientation radiale dont la périphérie radiale interne est liée en rotation à l'arbre moteur et à la périphérie radiale externe duquel le module M est rapporté à fixation par l'intermédiaire desdits organes de fixation 36.

Le flasque formant le moyen de support 32 est par exemple constitué par un volant moteur présentant une rigidité déterminée pour supporter toute la masse du module M, c'est à dire celle du mécanisme à double embrayage 10 et du dispositif de commande 12 réunies qui le constitue.

Préalablement au montage du module M, la périphérie radiale interne du flasque rigide formant le moyen de support 32 est fixée solidairement en rotation à une extrémité de l'arbre moteur (non représenté).

De préférence, la périphérie radiale interne du moyen de support 32 comporte des trous (non représentés) pour le passage de moyens de liaison, tels que des vis, qui sont reçus dans des perçages complémentaires de l'arbre moteur, la liaison par vissage entre le moyen de support 32 et l'arbre moteur 30 est avantageusement réversible afin de permettre un démontage ultérieur.

En variante, le moyen de support 32 du module M est rapporté solidairement sur l'arbre moteur par tout autre moyen approprié, par exemple par soudage.

Bien entendu, le flasque rigide est également susceptible d'être réalisé en une seule pièce, venue de matière, avec l'arbre moteur.

Selon une variante non représentée, le moyen de support 32 assure également une fonction d'amortissement et/ou filtration et est alors par exemple réalisé sous la forme d'un double volant amortisseur.

Le premier embrayage E1 du mécanisme 10 forme des premiers moyens d'accouplement temporaire du premier arbre mené 28A avec l'arbre moteur.

Le premier embrayage E1 comporte un premier plateau annulaire de pression 34 qui est monté solidaire en rotation du plateau de réaction 30 autour de l'axe X de rotation.

De préférence, la liaison en rotation entre le plateau de pression 34 et le plateau de réaction 30 est assuré via le premier couvercle 18.

Le premier plateau de pression 34 est lié en rotation avec possibilité de déplacement axial par rapport au premier couvercle 18, par exemple ici par des languettes élastiques 35 qui sont agencées radialement à la périphérie externe.

De manière connue, de telles languettes élastiques 35 sont agencées tangentiellement et comportent respectivement une extrémité solidaire du premier plateau de pression 34 et une autre extrémité solidaire du premier couvercle 18.

Le premier couvercle 18 est également solidaire du plateau de réaction 30 sur lequel il est par exemple fixé par vissage ou tout autre moyen de fixation approprié.

Le premier plateau de pression 34 est plus particulièrement agencé axialement en vis-à-vis d'une face arrière 38 du plateau de réaction 30.

Le premier embrayage E1 comporte un premier disque de friction 40 qui est interposé axialement entre le plateau de réaction 30 et le premier plateau de pression 34.

Le premier disque de friction 40 comporte conventionnellement sur ses deux faces une garniture annulaire de friction 42 qui est agencée axialement en vis-à-vis de surfaces de friction complémentaires du premier plateau de pression 34 et du plateau de réaction 30.

Le premier disque de friction 40 est destiné à être serré contre la face arrière 38 du plateau de réaction 30 par le premier plateau de pression 34 pour accoupler temporairement le premier arbre mené 28A avec l'arbre moteur.

Le premier disque de friction 40 est monté solidaire en rotation du premier arbre mené 28A, par coopération de formes entre des cannelures complémentaires pour réaliser un engrènement.

Le premier disque de friction 40 est monté coulissant axialement sur le premier arbre mené 28A tubulaire entre une position avant dans laquelle le disque 40 est serré contre ladite face arrière 38 du plateau de réaction 30 et une position arrière vers laquelle il est rappelé élastiquement et dans laquelle le premier disque de friction 40 est éloigné de la face arrière 38 du plateau de réaction 30.

Le premier embrayage E1 comporte un premier diaphragme 44 formant un levier d'actionnement du premier plateau de pression 34.

Le plateau de réaction 30 et le premier couvercle 18 constituent des éléments axialement fixes par rapport auxquels le plateau de pression 34 est déplacé axialement par le premier diaphragme 44 en fonction des efforts appliqués par le dispositif de commande 12.

De manière connue, le premier diaphragme 44 comporte un anneau 45 radialement extérieur et des doigts 46 élastiques s'étendant radialement vers l'axe X de rotation depuis l'anneau 45 jusqu'à une extrémité intérieure libre.

De préférence, tous les doigts 46 du premier diaphragme 44 sont identiques. Le premier plateau de pression 34 est interposé axialement entre le plateau de réaction 30 et le premier diaphragme 44.

Le premier diaphragme 44 prend appui sur le premier couvercle annulaire 18 agencé axialement en arrière, lequel premier couvercle 18 globalement en "L" est fixé à l'avant au plateau de réaction 30 par une partie axiale 48 et comporte, dans le prolongement de cette partie 48, une partie radiale 50 formant un fond.

Une portion intermédiaire de chaque doigt 46 du premier diaphragme 44 est en appui axial sur une portion annulaire 52 du premier plateau de pression 34.

Les doigts 46 du premier diaphragme 44 fonctionnent ainsi à la manière d'un levier qui est, d'une part, en appui par son extrémité supérieure formée par l'anneau 45 contre le fond 50 du premier couvercle 18 et, d'autre part, en appui contre ladite portion 52 .

Les doigts 46 du premier diaphragme 44 sont flexibles élastiquement, notamment l'extrémité libre de chacun des doigts 46 opposée radialement à l'anneau 45 qui est destinée à être déplacée par les moyens d'actionnement 22 du dispositif, par exemple entre une position avant d'embrayage et une position arrière de débrayage.

En position avant d'embrayage, le premier diaphragme 44 sollicite axialement le premier plateau de pression 34 pour serrer le premier disque de friction 40, plus précisément la garniture de friction 42 portée par le disque 40, contre le plateau de réaction 30.

En position arrière de débrayage vers laquelle les doigts 46 sont rappelés élastiquement, le premier plateau de pression 34 n'est plus sollicité axialement par le premier diaphragme 44 de manière que le premier disque de friction 40 se trouve alors dans la position arrière.

Ainsi, en position avant d'embrayage, le premier arbre mené 28A est accouplé temporairement à l'arbre moteur, et en position arrière de débrayage, le premier disque de friction 40 est écarté du plateau de réaction 30 et du premier plateau de pression 34 de manière que le premier arbre mené 28A est découplé de l'arbre moteur.

Le mécanisme 10 à double embrayage comporte encore le deuxième embrayage E2 formant des deuxièmes moyens d'accouplement temporaire du deuxième arbre mené 28B avec l'arbre moteur.

Le deuxième embrayage E2 comporte un deuxième plateau de pression 54 et un deuxième disque de friction 56 dont les fonctions sont respectivement analogues à celles du premier plateau de pression 34 et du premier disque de friction 40.

Le deuxième plateau de pression 54 est monté axialement en vis-à-vis de la face avant 58 du plateau de réaction 30.

Le deuxième plateau de pression 54 est lié en rotation du plateau de réaction 30 par l'intermédiaire de languettes élastiques 55 et est également fixé à la partie avant 14A du deuxième couvercle 14.

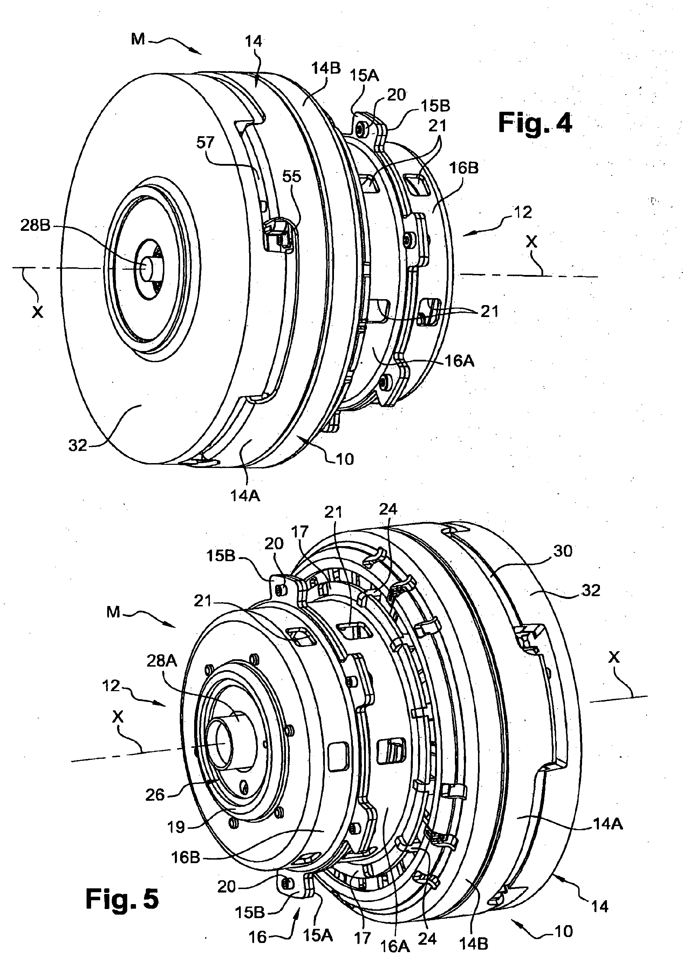

Comme illustré par les figures 2 et 4, la partie avant 14A du deuxième couvercle 14 comporte un profil en "L" formant des pattes radiales 57, réparties circonférentiellement de manière régulière, qui sont fixées sur la face avant du plateau de réaction 54, de préférence par vissage.

Le deuxième plateau de pression 54 est monté mobile axialement par rapport au plateau de réaction 30 et le deuxième couvercle 14 forme un tiroir qui coulisse axialement.

Le deuxième disque de friction 56 est interposé axialement entre le plateau de réaction 30 et le deuxième plateau de pression 54.

Comme le premier disque 40, le deuxième disque de friction 56 comporte sur ses deux faces une garniture annulaire de friction 60 qui est interposée axialement entre des surfaces de friction complémentaires que comportent la face avant 58 du plateau de réaction 30 et le deuxième plateau de pression 54.

Le deuxième disque de friction 56 est destiné à être serré contre la face avant 58 du plateau de réaction 30 par le deuxième plateau de pression 54 pour accoupler temporairement le deuxième arbre mené 28B avec l'arbre moteur.

A cet effet, le deuxième disque de friction 56 est monté solidaire en rotation du deuxième arbre mené 28B, et il est monté coulissant axialement sur la portion d'extrémité avant du deuxième arbre mené 28B entre une position arrière serrée contre la face avant 58 du plateau de réaction 30 et une position avant libre vers laquelle il est rappelé élastiquement et dans laquelle le deuxième disque de friction 56 est éloigné de la face avant 58 du plateau de réaction 30.

Le deuxième embrayage E2 comporte un deuxième diaphragme 62 formant un levier d'actionnement du deuxième plateau de pression 54. Le deuxième diaphragme 62 présente une structure analogue à celle du premier diaphragme 44.

Le deuxième diaphragme 62 est agencé axialement en arrière du premier diaphragme 44. Le deuxième diaphragme 62 est interposé axialement entre une portion radiale de la partie arrière 14B du premier couvercle 14 et une face avant du fond 50 du deuxième couvercle 18. Plus particulièrement, l'anneau 64 du deuxième diaphragme 62 est agencé en appui axial contre une face avant du fond 50 du deuxième couvercle 18.

Les doigts 66 du deuxième diaphragme 62 fonctionnent à la manière d'un levier. Ainsi, lorsqu'un effort axial d'actionnement est appliqué vers l'avant par des moyens d'actionnement 22 à l'extrémité libre des doigts 66 est transmis au couvercle 14, les doigts 66 prenant appui sur premier couvercle 18, par exemple ici par l'intermédiaire d'un jonc d'articulation.

Les doigts 66 du deuxième diaphragme 62 sont flexibles élastiquement entre une position avant d'embrayage dans laquelle le deuxième diaphragme 62 sollicite axialement vers l'arrière le deuxième plateau de pression 54 pour serrer le deuxième disque de friction 56 contre le plateau de réaction 30 par l'intermédiaire du deuxième couvercle 18, et une position arrière de débrayage vers laquelle les doigts 66 sont rappelés élastiquement et dans laquelle le deuxième plateau de pression 54 n'est plus sollicité axialement de manière que le deuxième disque de friction 56 soit dans sa position avant.

En position avant d'embrayage, le deuxième arbre mené 28B est accouplé à l'arbre moteur, et en position arrière de débrayage, le deuxième arbre mené 28B est inversement découplé de l'arbre moteur.

Lorsque le diaphragme 62 est sollicité, le deuxième couvercle 14 solidaire en rotation du deuxième plateau de pression 54 coulisse axialement vers l'arrière pour déplacer le plateau de pression 54 de sa position libre avant vers sa position arrière correspondant à la position avant d'embrayage du diaphragme 62.

Avantageusement, les premier et deuxième disques de friction 40 et 56 des embrayages E1 et E2 comportent chacun des moyens d'amortissement conventionnels à ressorts.

Le mécanisme 10 comporte encore le dispositif de commande 12 associé qui est destiné à commander indépendamment, d'une part, le premier diaphragme 44 du premier embrayage E1 entre les positions avant d'embrayage et arrière de débrayage et, d'autre part, le deuxième diaphragme 62 du deuxième embrayage E2 entre les positions avant d'embrayage et arrière de débrayage.

De préférence, les moyens d'actionnement 22 du dispositif de commande 12 sont constitués par un double actionneur comportant un corps cylindrique 68 dans lequel sont ménagés deux chambres de commande 70 et 72 qui sont destinées à être alimentées en fluide pour provoquer le déplacement axial d'un premier piston 74 et d'un deuxième piston 76, chacun des pistons étant monté coulissant dans l'une des chambres.

Le dispositif de commande 12 comporte une première butée 78 annulaire d'actionnement du premier diaphragme 44 qui est montée coulissante axialement, la première butée 78 sollicitant axialement sous l'action du piston 74 l'extrémité libre des doigts 46 du premier diaphragme 44, notamment vers la position avant d'embrayage.

Le dispositif de commande 12 comporte également une deuxième butée 80 annulaire d'actionnement du deuxième diaphragme 62 qui est montée coulissante axialement, la deuxième butée 80 sollicitant axialement sous l'action du piston 76 l'extrémité libre des doigts 66 du deuxième diaphragme 62, notamment vers la position avant d'embrayage.

De préférence, le fluide d'actionnement est constitué par de l'air de sorte que le double actionneur 22 est de type pneumatique.

Selon l'invention, le module M comportant le mécanisme 10 à double embrayage et le dispositif de commande 12 est donc monté solidaire du moyen de support 32 de manière que ledit moyen de support supporte intégralement la masse du module M.

Avantageusement, le module M comporte des moyens 82 de reprise d'efforts qui, intégrés au module M, sont aptes à reprendre les efforts que provoquent en fonctionnement les moyens d'actionnement 22 des embrayages E1 et E2 du mécanisme 10.

Grâce à quoi, lesdits efforts sont repris exclusivement à l'antérieur du module M suivant un flux de forces fermé de sorte que ces efforts ne sont en conséquence pas transmis à au moins l'un des premier et deuxième arbres 28A, 28B ou encore à la boîte de vitesses.

De préférence, les moyens de reprise d'efforts du module M sont constitués par un palier 82 qui est interposé axialement entre l'arrière du corps 68 du double actionneur 22 et la portion radiale 19 du carter de protection 16 du dispositif de commande 12 du mécanisme.

Le palier 82 est par exemple constitué par un roulement à billes qui supporte le double actionneur 22 formant les moyens d'actionnement du dispositif de commande 12 du mécanisme 10.

Le corps cylindrique 68 comporte une partie arrière 81 étagée pour le montage du palier 82, lequel est ainsi intégré axialement au bénéfice de l'obtention d'un module M particulièrement compact axialement.

Tel qu'illustré dans le détail de la figure 1, le palier 82 comporte un premier élément 84 et un deuxième élément 86 entre lesquels sont agencés les moyens de roulement 88, tels que des billes.

Le premier élément 84, ici une bague interne, est lié en rotation au corps 68 étagé contre lequel l'élément 84 en appui est immobilisé axialement vers l'avant.

Le premier élément 84 est solidaire du corps 68 du double actionneur 22 et n'est pas susceptible de se déplacer radialement, c'est à dire que la bague interne est montée serrée autour du corps 68.

Le deuxième élément 86, ici une bague externe, est lié en votation à la portion radiale 19 de la partie arrière 16B du carter 16.

Avantageusement, la liaison entre le deuxième élément 86 et la portion 19 du carter est en revanche conformée pour autoriser un déplacement relatif selon la direction radiale afin de former un moyen d'auto-centreur du dispositif de commande 12 par rapport au mécanisme 10.

Avantageusement, le palier 82 assure automatiquement le centrage du dispositif de commande 12 par rapport au carter 16 et donc au mécanisme 10 de manière à compenser les défauts de coaxialité éventuels entre l'axe du dispositif commande 12 et l'axe principal X de rotation.

En effet, en raison des tolérances de fabrication et du nombre d'éléments constitutifs du module M, la position de l'axe du dispositif de commande 12 est susceptible de varier par rapport à celle de l'axe X de rotation du système 1 déterminée notamment par l'arbre moteur.

De préférence et tel qu'illustré à la figure 1, la liaison autocentreuse est obtenue en pinçant élastiquement la bague externe formant le deuxième élément 86 par l'intermédiaire d'un élément annulaire 90 d'application.

L'élément 90 comporte une première partie 92, dite de liaison, qui est reliée à la portion radiale 19 du carter par l'intermédiaire d'organes de liaison 94, tels que des rivets, tandis qu'une deuxième partie 96, dite d'application, coopère avec la bague externe 86.

De préférence, un organe élastique 98 est interposé axialement entre la tête du rivet 94 et la première partie 92 de l'élément 90 de manière que la deuxième partie 94 est appliquée contre la bague externe 86 par un effort élastique de serrage s'exerçant selon la direction axiale.

L'organe élastique 98 est par exemple une rondelle tronconique qui sollicite l'élément 90 avec une force élastique déterminée pour maintenir axialement par pincement la bague externe 86 entre la partie 96 de l'élément 90 et la face avant de la portion 19 du carter 16 tout en autorisant néanmoins un déplacement relatif selon la direction radiale afin d'assurer la fonction d'auto-centrage.

De préférence, des moyens de blocage (non représentés) sont agencés entre le double actionneur 22 et un élément de la boîte de vitesses adjacente axialement, par exemple un carter de boîte de vitesses, afin d'immobiliser en rotation le corps 68.

De tels moyens de blocage en rotation sont par exemple constitués par au moins un pion s'étendant axialement vers l'arrière.

De préférence, les éléments tournants du double actionneur 22 sont constitués par les bagues de roulement des butées d'actionnement 78 et 80 coopérant avec les doigts des diaphragmes 44 et 62.

Grâce au jeu radial introduit au niveau du palier 82 auto-centreur, les défauts de coaxialité précités sont compensés et on évite ainsi tout glissement du point de contact entre les butées d'actionnement 78 et 80 coopérant avec les doigts des diaphragmes 44 et 62.

Dans l'exemple de réalisation illustré à la figure 1, le jeu radial autorisant l'auto-centrage est introduit au niveau de la bague externe 86 du palier 82 et par rapport au carter 16 de protection du dispositif de commande 12 qui est lié au premier couvercle 18 du mécanisme 10.

Toutefois, il ne s'agit que d'un exemple non limitatif de réalisation d'une telle liaison autocentreuse.

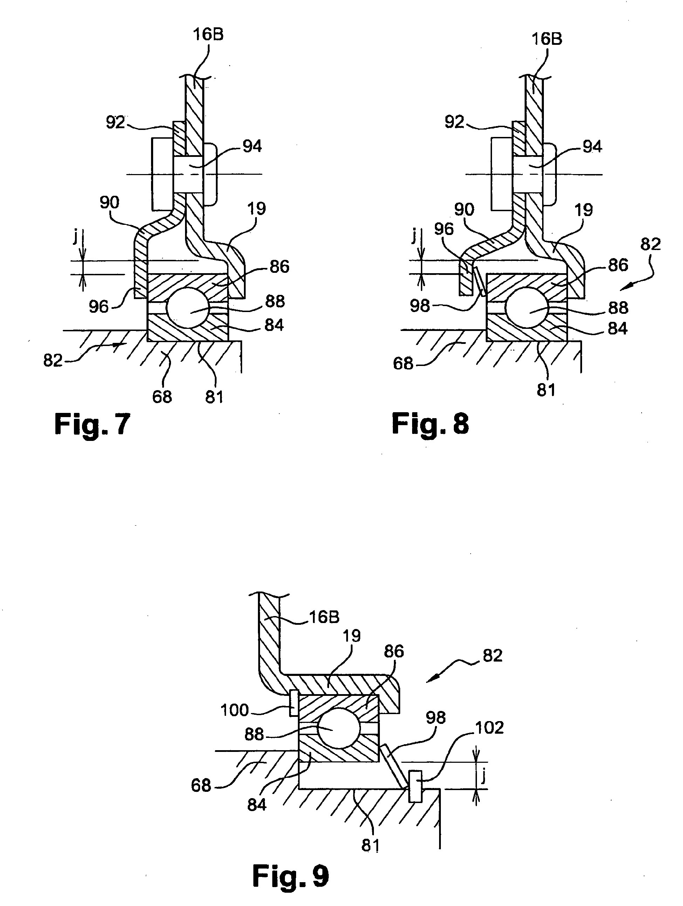

D'autres variantes de réalisation d'une telle liaison données également uniquement à titre d'exemple seront décrites ci-après par comparaison et en référence aux figures 7 à 9.

La figure 7 illustre une première variante de réalisation dans laquelle l'organe élastique 98 a été supprimé.

Avantageusement, l'organe élastique 98 est constitué par l'élément 90 d'application de l'effort axial de serrage sur la bague externe 86, ledit élément 90 étant susceptible de se déformer élastiquement selon la direction axiale.

La bague interne 84 est, comme précédemment, montée serrée autour de la partie étagée 81 du corps 68 du double actionneur 22 tandis que la bague externe 86 est pincée axialement, à l'avant, par la partie 96 de l'élément 90 déformable élastiquement et, à l'arrière, par un tronçon de la portion 19 de la partie arrière 16B du carter de protection 16.

L'élément 90 est lié à la partie arrière 16B du carter par l'intermédiaire d'un rivet 94 qui en serre axialement et solidairement en rotation la partie 92 dudit élément avec le carter 16.

Avantageusement, l'effort de serrage axial appliqué, par l'élément 90 déformable élastiquement, sur la bague externe 86 du palier 82 autorise un déplacement relatif selon la direction radiale illustré par un jeu "j" de manière à réaliser ladite liaison auto-centreuse.

La figure 8 illustre une deuxième variante de réalisation, similaire à la première variante de la figure 7 qui vient d'être décrite et par comparaison avec laquelle l'organe élastique 98 est de nouveau distinct de l'élément 90.

Selon cette deuxième variante, l'organe élastique 98 est interposé axialement entre la partie 96 de l'élément 90 et la bague externe 86 du palier 82 qu'elle sollicite axialement.

Avantageusement, l'organe élastique 98 est par exemple constitué par une rondelle élastique tronconique qui n'est toutefois plus, par comparaison avec la figure 1, agencée au niveau du rivet 94 de liaison de l'élément 90 avec le carter 16.

La figure 9 illustre une troisième variante de réalisation dans laquelle, par comparaison avec les exemples de réalisation des figures 1, 7 et 8, le jeu radial "j" d'auto-centrage est agencé entre la bague interne 84 et la partie étagée 81 du corps 68 du double actionneur 22 et non pas la bague externe 86.

La bague externe 86 du palier 82 est donc montée serrée axialement entre une bague ou anneau d'arrêt 100 de type "circlip" et la portion radiale 19 du carter 16.

L'organe élastique 98 est constitué par une rondelle élastique tronconique qui sollicite axialement, de l'arrière vers l'avant, la bague interne 84 du levier 82, ledit organe élastique 98 étant immobilisé axialement pas une bague d'arrêt 102, de type "circlip", qui est solidaire du corps 68 du double actionneur 22 formant le dispositif de commande 12, ladite bague 102 étant reçue dans une gorge complémentaire de la partie étagée 81.

L'organe élastique 98 sollicite ainsi la bague interne 84 contre une face d'orientation radiale de la partie étagée 81 du corps 68 du double actionneur 22.

Dans les différents exemples de réalisation, l'effort élastique sollicitant axialement la bague interne 84 ou externe 86 du palier 82 est déterminé de manière que le palier 82 assure à la fois le support du double actionneur 22 et autorise le glissement relatif des pièces selon la direction grâce auquel l'auto-centrage est obtenu.

Selon l'invention, il est prévu des moyens de réglage axial destinés à permettre, lors de l'assemblage du mécanisme 10 et du dispositif de commande 12 pour former le module M, de régler axialement la position de certains éléments, en particulier de positionner axialement les moyens d'actionnement 22 du dispositif de commande 12 par rapport au mécanisme 10 à double embrayage et d'atteindre une position axiale déterminée correspondant à une position, dite nominale, pour au moins l'un des embrayages.

De préférence, l'embrayage considéré pour la mise en position nominale correspond au deuxième embrayage E2 car il est celui des deux embrayages E1, E2 du mécanisme 10 qui est sollicité lors du démarrage du moteur du véhicule pour engager un premier rapport de vitesse (rapport impairs) en accouplant l'arbre moteur au deuxième arbre 28B, ici l'arbre plein, et qui est à ce titre susceptible de subir des phénomènes d'usures plus important que le premier embrayage E1 destinés au passage des rapports pairs par le premier arbre 28A.

Dans le cas du deuxième embrayage E2, la position nominale correspond à une position axiale dans laquelle la deuxième butée 80 des moyens d'actionnement 22 sollicite le deuxième diaphragme 62 associé avec un effort correspondant aux conditions de fonctionnement "à neuf".

Une telle position nominale permet avantageusement de supprimer axialement toute course morte entre les moyens d'actionnement 22 et le deuxième embrayage E2 du mécanisme 10 lors du fonctionnement ultérieur du système 1.

En variante (non représentée), il est également possible de prévoir des moyens de réglage pour le premier embrayage E1 afin de régler la position axiale entre la première butée 78, déplacée axialement par les moyens d'actionnement associés, et les doigts du premier diaphragme 44.

Avantageusement, les moyens de réglage de la position axiale intervenant pour le deuxième embrayage E2 sont alors indépendants de ceux du premier embrayage E1.

Les moyens de réglage axial sont plus particulièrement destinés à régler, préalablement au montage du module M sur le moyen de support 32, le point contact entre les doigts du deuxième diaphragme 62 et la deuxième butée 80 associée dont le déplacement axial est commandé par le piston 76 du double actionneur 22.

Pour autoriser le réglage axial à la position nominale du deuxième embrayage E2 du mécanisme 10, le deuxième embrayage E2 comporte avantageusement un couvercle 14 qui est réalisé en au moins deux parties, respectivement la partie avant 14A et la partie arrière 14B.

Comme décrit précédemment, les parties 14A et 14B du couvercle se superposent axialement au moins partiellement à leur extrémité pourvues de lamage de sorte que ces parties 14A et 14B sont susceptibles de coulisser axialement l'une par rapport à l'autre, grâce à quoi il est possible de procéder à un réglage axial jusqu'à atteindre ladite position nominale déterminée.

Avantageusement, les moyens de réglage axial sont agencés de manière à permettre de faire varier axialement la position du plateau de pression 54 du deuxième embrayage E2 par rapport à son tiroir d'actionnement formé par le couvercle 14A, 14B sur lequel le diaphragme 62 est en appui.

Pour obtenir la position nominale correspondant aux conditions de fonctionnement à neuf du deuxième embrayage E2, on procède à la fermeture du deuxième embrayage en appliquant un effort axial qui correspond à son tarage nominal, le diaphragme 62 est alors également déplacé pour atteindre la position nominale.

Lorsque ladite position nominale est atteinte, on procède au verrouillage des deux parties avant et arrière 14A, 14B du couvercle du deuxième embrayage E2 dans ladite position nominale.

A cet effet, il est prévu des moyens de verrouillage qui sont aptes, une fois la position nominale atteinte, à immobiliser les moyens de réglage axial formés par le couvercle 14 en deux parties.

L'immobilisation par les moyens de verrouillage est susceptible d'être réalisée par tout moyen, les deux parties avant 14A et arrière 14B du couvercle 14 du deuxième embrayage E2 sont par exemple susceptibles d'être liées entre elles par soudage.

De préférence, les moyens de verrouillage sont constitués par des vis afin de permettre un démontage ultérieur, notamment en vue d'intervention sur le mécanisme 10 à double embrayage.

Selon une variante non représentée, les moyens de réglage axial mis en oeuvre pour compenser les différentes tolérances et obtenir un réglage optimal de la position nominale des moyens d'actionnement 22 de l'un E2 des embrayages E1, E2 du mécanisme 10 sont agencés non pas au sein dudit mécanisme 10 mais du dispositif de commande 12.

Selon une telle variante, les moyens de réglage axial sont par exemple intégrés au carter 16, c'est-à-dire implantés entre le double actionneur 22 et le mécanisme 10, en particulier entre le palier 82 supportant le double actionneur 22 et le mécanisme 10.

Avantageusement, lors du montage des éléments constitutifs du module M selon l'invention, on procède également à des opérations destinées à faciliter le montage ultérieur du module M sur le moyen de support 32.

Lors de son montage, les embrayages E1 et E2 d'un mécanisme 10 à double embrayage sont en général "ouvert", c'est-à-dire que chaque diaphragme 44, 62 est en position arrière de débrayage et que ce faisant le disque de friction 40, 56 est libre de se déplacer axialement et surtout angulairement entre le plateau de pression 34, 54 et le plateau de réaction 30.

Cela est également le cas pour le mécanisme 10 du module M selon l'invention. Or, une fois le module M fixé au moyen de support 32, le montage se poursuit par l'introduction axiale des arbres menés 28A et 28B dont on comprendra qu'il est particulièrement difficile en l'absence de tout positionnement angulaire des disques de friction 40, 56, en effet les cannelures des disques 40, 56 ne seront pas en coïncidence avec celles des arbres 28A, 28B.

Chacun des disques de friction 40, 56 est de surcroît indépendant de l'autre au même titre que le sont les premier et deuxième arbres 28A et 28B de sorte qu'il faut assurer individuellement le positionnement de chacun des disques 40, 56.

Selon un autre aspect de l'invention, on décrira maintenant une solution préférée de moyens de positionnement tout particulièrement destinés à réaliser un positionnement angulaire des disques de friction 40, 56 du mécanisme 10, tant par rapport à l'arbre moteur qu'aux arbres menés 28A, 28B liés à la boîte de vitesses, afin de faciliter le montage ultérieur du module M.

Dans la solution, les moyens de positionnement consistent en la combinaison de différents moyens qui sont successivement décrits ci-après.

Avantageusement, les moyens de positionnement comportent un premier moyen destiné à assurer un positionnement angulaire déterminé du module M par rapport au moyen de support 32 sur lequel il est fixé par l'intermédiaire des vis 36.

De préférence, le premier moyen (non représenté) est un moyen détrompeur apte à garantir que le module M ne puisse occuper qu'une seule et unique position lors de son montage.

Avantageusement, le premier moyen de positionnement est donc constitué par un moyen solidaire d'un des éléments, tels qu'un pion de centrage solidaire du volant moteur formant le moyen de support 32 ou encore par la position particulière de l'une des vis de fixation 36.

En variante, le premier moyen de positionnement est réalisé sous la forme d'un marquage appliqué respectivement sur le moyen de support 32 et sur le module M de manière que le support 32 et le module M doivent être mis en correspondance pour obtenir la position de référence désirée.

Avantageusement, les moyens de positionnement comportent encore un deuxième moyen (non représenté) constitué par un outillage, désigné ci-après centreur, apte à indexer radialement et angulairement les cannelures des disques de friction 40, 56 des premier et deuxième embrayages E1, E2 du mécanisme par rapport à la position de référence qu'occupe le module M après sa fixation sur le moyen de support 32.

De préférence, le centreur comporte principalement une première partie d'orientation radiale constituée par exemple par un disque ou une pluralité de bras en étoile et une deuxième partie d'orientation axiale qui s'étend centralement à partir de la première partie.

La partie radiale du centreur est apte à être positionnée angulairement en relation avec ladite position de référence que détermine ensuite le premier moyen de positionnement lors du montage du module M.

La partie axiale du centreur est conformée pour correspondre aux arbres menés 28A et 28B qui sont destinés à être introduits axialement, de préférence après la fixation du module M sur le moyen de support 32.

La partie axiale du centreur comporte, d'une part, des cannelures simulant le premier arbre 28A destinées à coopérer en fonctionnement avec celles du disque de friction 40 du premier embrayage E1 et, d'autre part, des cannelures simulant le deuxième arbre 28B destinées à coopérer en fonctionnement avec celles du disque de friction 56 du deuxième embrayage E2.

Grâce à un tel centreur, on procède au positionnement angulaire de chacun des disques de friction 40 et 56 du mécanisme 10.

Le centreur est utilisé préalablement au montage du module M sur le moyen de support 32 et escamoté avant ledit montage du module M sur le moyen de support 32.

Avantageusement, le centreur est un outillage réalisé en métal ou en matière plastique d'une rigidité suffisante pour constituer un moyen de manutention du module M.

Les moyens de positionnement comportent avantageusement un troisième moyen destiné à immobiliser les disques de friction 40 et 56 dans lesdites positions angulaires avant qu'il soit procédé au retrait du centreur en vue du montage du module M.

Avantageusement, le troisième moyen est constitué par deux clapets anti-retour qui sont agencés au niveau des moyens d'alimentation en fluide des chambres de commande 70 et 72 du double actionneur 22.

Les clapets sont destinés à être raccordés provisoirement à une source de fluide afin d'établir une pression déterminée dans chacune des chambres de commande 70, 72 propre à provoquer le déplacement des pistons 74 et 76 afin qu'ils sollicitent axialement les diaphragmes 44 et 62 avec un effort suffisant pour fermer chacun des embrayages E1, E2 du mécanisme 10.

Grâce à quoi, les premier et deuxième embrayages E1 et E2 étant fermés, les disques de friction 40 et 56 sont alors immobilisés dans la position angulaire déterminée au moyen du centreur.

Une fois la mise en pression réalisée et les embrayages E1, E2 fermés, il est alors possible d'ôter le centreur sans aucun risque que les disques de friction 40, 56 quittent la position angulaire déterminée dans laquelle ils ont été placés par le centreur.

De préférence, les clapets sont intégrés à la structure du double actionneur 22 et sont tarés pour maintenir une pression dans les chambres de commande 70 et 72 qui soit suffisante pour garantir la fermeture des embrayages E1, E2 et l'immobilisation en position des disques de friction 40, 56.

Avantageusement, la pression ainsi établie dans les chambres de commande 70 et 72 permet d'appliquer un effort de précharge grâce auquel on garantit le contact entre les moyens d'actionnement 22, plus précisément les butées 78, 80 mues par les pistons 74 et 76, et les doigts des diaphragmes 44 et 62 des embrayages E1, E2.

Par conséquent, on procède avantageusement aux opérations suivantes de conditionnement du module M en vue de son montage sur le moyen de support 32.

Selon une première étape, on procède à la mise en place du centreur formant le deuxième moyen desdits moyens de positionnement afin de positionner angulairement chacun des disques de friction 40, 56 dans une position angulaire déterminée.

De préférence, le centreur est mis en place dès l'assemblage du le module M et le centreur est également susceptible de servir de support pour le montage des éléments du mécanisme 10 à double embrayage.

Selon une deuxième étape, le module M étant constitué, on procède au raccordement d'une source d'alimentation en fluide sur les clapets du double actionneur 22 et à la mise en pression des chambres de commande 70, 72 afin de provoquer la fermeture des embrayages E1 et E2 et immobiliser les disques de friction 40 et 56 dans ladite position angulaire déterminée.

Selon une troisième étape, on procède alors au retrait du centreur et le module M est alors prêt à être fixé sur le moyen de support 32.

Grâce à ces différentes étapes, le module M obtenu est susceptible d'être aisément et rapidement monté en une seule étape et l'ensemble du système de transmission 1 également.

Bien entendu, les étapes précitées sont avantageusement réalisées chez le fabriquant du module M qui livre alors au constructeur un module M prêt à monter.

En effet, un tel module M est alors fixé dans une position angulaire déterminée en référence à l'arbre moteur et cela grâce au premier moyen qui intervient entre le module M et le moyen de support 32 et les arbres menés 28A et 28B sont susceptibles d'être facilement introduits axialement pour finaliser le montage du système de transmission 1.

Le conditionnement du module M comporte au moins une étape de positionnement axial et/ou angulaire des disques de friction dans une position déterminée et une étape de verrouillage des disques de friction dans cette position déterminée, lesdites étapes étant avantageusement réalisées avant le montage du module M sur le moyen de support 32.

## Revendications

1. Système de transmission (1), notamment pour véhicule automobile, comportant autour d'un axe (X) de rotation d'orientation axiale au moins :
- un mécanisme (10) à double embrayage comportant un premier embrayage (E1) et un deuxième embrayage (E2), chaque embrayage (E1, E2) comportant un levier (44, 62), tel qu'un diaphragme, destiné à coopérer avec un plateau de pression (34, 54), solidaire en rotation d'un couvercle (18, 14), pour enserrer un disque de friction (40, 56) entre un plateau de réaction (30) et ledit plateau de pression (34, 54), lesdits embrayages (E1, E2) étant respectivement destinés à accoupler sélectivement, à un arbre moteur apte à être entraîné en rotation par un moteur, un premier arbre (28A) et un deuxième arbre (28B) qui sont, d'une part, chacun liés à un des disques de friction (40, 56) et, d'autre part, destinés à être liés à une boîte de vitesses, et
- un dispositif de commande (12) qui, associé audit mécanisme. (10), comporte des moyens d'actionnement (22) qui, aptes à actionner respectivement le premier levier (44) du premier embrayage (E1) et le deuxième levier (62) du deuxième embrayage (E2), sont commandés sélectivement pour permettre le passage de rapports de vitesses de parités différentes,
- au moins le mécanisme (10) à double embrayage et le dispositif de commande (12) sont pré-montés pour constituer un module (M) formant un ensemble unitaire et ledit module (M) est monté solidaire d'un moyen de support (32) qui, lié à l'arbre moteur, supporte intégralement le module (M), **caractérisé en ce que** le module (M) comporte des moyens de réglage axial destinés à permettre, préalablement à son montage sur le moyen de support (32), de positionner axialement le mécanisme (10) à double embrayage et les moyens d'actionnement (22) du dispositif de commande (12) dans une position axiale déterminée correspondant à une position, dite nominale, le deuxième embrayage (E2) du mécanisme (10) comportant un deuxième couvercle (14) qui est réalisé en au moins deux parties, respectivement avant (14A) et arrière (14B), aptes à coulisser axialement l'une par rapport à l'autre de manière à permettre un réglage axial jusqu'à atteindre ladite position nominale déterminée.

2. Système selon la revendication 1, **caractérisé en ce que** le module (M) est fixé par l'intermédiaire d'organes de fixation (36) audit moyen de support (32) qui en supporte entièrement la masse, lesdits organes de fixation (36) étant préalablement montés de manière imperdable sur le module (M).

3. Système selon la revendication 2, **caractérisé en ce que** le moyen de support (32) est constitué par au moins un flasque rigide d'orientation radicale, tel qu'un volant moteur, dont la périphérie radiale interne est liée en rotation à l'arbre moteur et à la périphérie radiale externe duquel le module (M) est rapporté à fixation par l'intermédiaire desdits organes de fixation (36).

4. Système selon l'unes des revendications 1 à 3, **caractérisé en ce que** le module (M) comporte des moyens de verrouillage aptes à immobiliser les moyens de réglage axial dans ladite position nominale.

5. Système selon l'une quelconque des revendications précédentes, **caractérisé en ce que** le module comporte des moyens de reprise d'efforts (82), tels qu'un palier, qui sont aptes à reprendre les efforts que provoquent en fonctionnement les moyens d'actionnement (22) des embrayages (E1, E2) de sorte que lesdits efforts soient repris exclusivement à l'intérieur dudit module (M) suivant un flux de forces fermé.

6. Système selon l'une quelconque des revendications précédentes, **caractérisé en ce que** le module (M) comporte un carter (16) de protection du dispositif de commande (12), ledit carter (16) étant lié par des moyens de liaison à un premier couvercle (18) que comporte le premier embrayage (E1) du mécanisme (10) à double embrayage.

7. Système selon la revendication 6 prise en en combinaison avec la revendication 5, **caractérisé en ce que** les moyens de reprise d'efforts du module (M) sont constitués par un palier (82) qui est interposé axialement entre les moyens d'actionnement (22) qu'il supporte et une portion radiale (19) dudit carter (16) de protection du dispositif de commande (12) du mécanisme.

8. Système selon la revendication 7, **caractérisé en ce que** le palier (82) est lié au dispositif de commande (12) ou au carter (16) de protection avec une capacité de déplacement relatif selon la direction radiale de manière à former un moyen d'auto-centrage du dispositif de commande (12) par rapport à l'axe (X) de rotation.

## Patentansprüche

1. Übertragungssystem (1), insbesondere für ein Kraftfahrzeug, das um eine Drehachse (X) mit axialer Ausrichtung herum mindestens aufweist:
- einen Mechanismus (10) mit Doppelkupplung, der eine erste Kupplung (E1) und eine zweite Kupplung (E2) aufweist, wobei jede Kupplung (E1, E2) einen Hebel (44, 62), wie eine Tellerfeder, aufweist, der dazu bestimmt ist, mit einer Druckplatte (34, 54) zusammenzuwirken, in Drehung fest mit einem Deckel (18, 14) verbunden ist, um eine Reibscheibe (40, 56) zwischen einer Gegenanpressplatte (30) und der Druckplatte (34, 54) einzuspannen, wobei die Kupplungen (E1, E2) je dazu bestimmt sind, selektiv an eine Antriebswelle, die von einem Motor in Drehung versetzt werden kann, eine erste Welle (28A) und eine zweite Welle (28B) anzukoppeln, die einerseits je mit einer der Reibscheiben (40, 56) verbunden und andererseits dazu bestimmt sind, mit einem Getriebe verbunden zu werden, und
- eine Steuervorrichtung (12), die, dem Mechanismus (10) zugeordnet, Betätigungseinrichtungen (22) aufweist, die, geeignet, den ersten Hebel (44) der ersten Kupplung (E1) bzw. den zweiten Hebel (62) der zweiten Kupplung (E2) zu betätigen, selektiv gesteuert werden, um das Schalten von Gängen unterschiedlicher Paritäten zu erlauben,
- mindestens der Mechanismus (10) mit Doppelkupplung und die Steuervorrichtung (12) vormontiert sind, um ein eine einstückige Einheit formendes Modul (M) zu bilden, wobei das Modul (M) fest mit einer Trägereinrichtung (32) verbunden montiert wird, die, mit der Antriebswelle verbunden, das Modul (M) vollständig trägt,
**dadurch gekennzeichnet, dass** das Modul (M) Einrichtungen zur axialen Regelung aufweist, die dazu bestimmt sind, vor seiner Montage auf die Trägereinrichtung (32) den Mechanismus (10) mit Doppelkupplung und die Betätigungseinrichtungen (22) der Steuervorrichtung (12) in einer bestimmten axialen Stellung axial zu positionieren, die einer so genannten Nennstellung entspricht, wobei die zweite Kupplung (E2) des Mechanismus (10) einen zweiten Deckel (14) aufweist, der aus mindestens zwei Teilen besteht, einem vorderen (14A) bzw. einem hinteren (14B), die axial zueinander gleiten können, um eine axiale Regelung zu erlauben, bis die bestimmte Nennstellung erreicht ist.

2. System nach Anspruch 1, **dadurch gekennzeichnet, dass** das Modul (M) mit Hilfe von Befestigungselementen (36) an der Trägereinrichtung (32) befestigt wird, die seine Masse vollständig trägt, wobei die Befestigungselemente (36) vorher unverlierbar auf das Modul (M) montiert werden.

3. System nach Anspruch 2, **dadurch gekennzeichnet, dass** die Trägereinrichtung (32) aus mindestens einem steifen Flansch mit radialer Ausrichtung, wie einem Schwungrad, besteht, dessen innerer radialer Umfang in Drehung mit der Antriebswelle verbunden ist und an dessen äußerem radialen Umfang das Modul (M) mit Befestigung mittels der Befestigungselemente (36) angefügt ist.

4. System nach einem der Ansprüche 1 bis 3, **dadurch gekennzeichnet, dass** das Modul (M) Verriegelungseinrichtungen aufweist, die die Einrichtungen zur axialen Regelung in der Nennstellung arretieren können.

5. System nach einem der vorhergehenden Ansprüche, **dadurch gekennzeichnet, dass** das Modul Lastaufnahmeeinrichtungen (82) wie ein Lager aufweist, die die Kräfte aufnehmen können, die im Betrieb die Betätigungseinrichtungen (22) der Kupplungen (E1, E2) hervorrufen, so dass die Kräfte ausschließlich im Inneren des Moduls (M) gemäß einem geschlossenen Kräftefluss aufgenommen werden.

6. System nach einem der vorhergehenden Ansprüche, **dadurch gekennzeichnet, dass** das Modul (M) ein Schutzgehäuse (16) der Steuervorrichtung (12) aufweist, wobei das Gehäuse (16) durch Verbindungseinrichtungen mit einem ersten Deckel (18) verbunden ist, den die erste Kupplung (E1) des Mechanismus (10) mit Doppelkupplung aufweist.

7. System nach Anspruch 6 in Kombination mit Anspruch 5, **dadurch gekennzeichnet, dass** die Lastaufnahmeeinrichtungen des Moduls (M) aus einem Lager (82) bestehen, das axial zwischen den von ihm getragenen Betätigungseinrichtungen (22) und einem radialen Abschnitt (19) des Schutzgehäuses (16) der Steuervorrichtung (12) des Mechanismus eingefügt ist.

8. System nach Anspruch 7, **dadurch gekennzeichnet, dass** das Lager (82) mit der Steuervorrichtung (12) oder mit dem Schutzgehäuse (16) mit einer relativen Verschiebungskapazität in radialer Richtung verbunden ist, um eine Selbstzentriereinrichtung der Steuervorrichtung (12) bezüglich der Drehachse (X) zu formen.

## Claims

1. Transmission system (1), in particular for a motor vehicle, comprising, about an axis (X) of rotation of axial orientation, at least:
- a dual-clutch mechanism (10) comprising a first clutch (E1) and a second clutch (E2), each clutch (E1, E2) comprising a lever (44, 62), such as a diaphragm, intended to cooperate with a pressure plate (34, 54), which is coupled in rotation to a cover (18, 14), in order to clamp a friction disc (40, 56) between a reaction plate (30) and the said pressure plate (34, 54), the said clutches (E1, E2) being respectively intended to selectively couple, to a drive shaft able to be rotated by an engine, a first shaft (28A) and a second shaft (28B) which are, on the one hand, each connected to one of the friction discs (40, 56) and, on the other hand, intended to be connected to a gearbox,
and
- a control device (12) which, associated with the said mechanism (10), comprises actuating means (22) which, able to respectively actuate the first lever (44) of the first clutch (E1) and the second lever (62) of the second clutch (E2), are selectively controlled to allow gear ratios of different parities to be shifted,
- at least the dual-clutch mechanism (10) and the control device (12) are pre-mounted to constitute a module (M) forming a unitary assembly and the said module (M) is securely mounted to a support means (32) which, connected to the drive shaft, integrally supports the module (M), **characterized in that** the module (M) comprises axial adjusting means intended to make it possible, prior to its assembly on the support means (32), to axially position the dual-clutch mechanism (10) and the means (22) for actuating the control device (12) in a defined axial position corresponding to a "nominal" position, the second clutch (E2) of the mechanism (10) comprising a second cover (14) which is produced in at least two parts, a front part (14A) and a rear part (14B) respectively, which are able to slide axially with respect to one another so as to allow an axial adjustment until the said defined nominal position is reached.

2. System according to Claim 1, **characterized in that** the module (M) is fixed via fixing members (36) to the said support means (32) which entirely supports the mass thereof, the said fixing members (36) being captively preassembled on the module (M).

3. System according to Claim 2, **characterized in that** the support means (32) is constituted by at least one rigid flange of radial orientation, such as an engine flywheel, of which the inner radial periphery is connected in rotation to the drive shaft, and to the outer radial periphery of which the module (M) is fixedly attached via the said fixing members (36).

4. System according to one of Claims 1 to 3, **characterized in that** the module (M) comprises locking means able to immobilize the axial adjusting means in the said nominal position.

5. System according to any one of the preceding claims, **characterized in that** the module comprises means (82) for taking up loads, such as a bearing, which are able to take up the loads produced in operation by the means (22) for actuating the clutches (E1, E2), such that the said loads are taken up exclusively inside the said module (M) with a closed flow of forces.

6. System according to any one of the preceding claims, **characterized in that** the module (M) comprises a casing (16) for protecting the control device (12), the said casing (16) being connected by connecting means to a first cover (18) belonging to the first clutch (E1) of the dual-clutch mechanism (10).

7. System according to Claim 6 taken in combination with Claim 5, **characterized in that** the means for taking up loads of the module (M) are constituted by a bearing (82) which is interposed axially between the actuating means (22) which it supports and a radial portion (19) of the said protective casing (16) of the control device (12) of the mechanism.

8. System according to Claim 7, **characterized in that** the bearing (82) is connected to the control device (12) or to the protective casing (16) with a capacity of relative movement in the radial direction so as to form a means for self-centring the control device (12) with respect to the axis (X) of rotation.
